# EUROPEAN PATENT SPECIFICATION

(11) **EP 0 431 724 B1**
(45) Date of publication and mention of the grant of the patent: **10.07.1996**
(21) Application number: 90305838.6
(22) Date of filing: 30.05.1990
(51) Int. Cl.: G06F 17/30

(54) **TV game machine**
Fernsehspielmaschine
Jeu vidéo

(30) Priority: 07.12.1989 JP 141943/89
(43) Date of publication of application: 12.06.1991
(73) Proprietor: SNK CORPORATION, Suita-shi, Osaka (JP)
(72) Inventor: Kita, Toshihiko, Ikuno-ku, Osaka (JP)
(74) Representative: Burke, Steven David

(56) References cited:
- US-A- 3 789 136
- US-A- 4 494 197
- US-A- 4 922 420

## Description

The present invention relates to a video games machine and specifically a video games machine for professional use.

With prior art video games machines for professional use, only one kind of game can be played with a single machine. To play a different game, it is necessary to replace a printed circuit board for a game with another one. A games machine with which plural kinds of games can be played is required. But its mechanism has to be simple in order to prevent increase in cost. Also, such a game machine is required to have means for informing the player of which one of the games he is currently playing.

It is an object of the present invention to provide a video games machine which allows a player to select any one game from among a plurality of games and which is less costly.

As defined by claim 1, a video games machine in accordance with the present invention comprises a main unit housing a processor which can perform processing operations according to stored instructions so as to enable the playing of a video game, the stored instructions being derived from a cartridge detachably coupled to the unit via a connector means of the unit, wherein the connector means is arranged to allow the simultaneous coupling to said unit of a plurality of cartridges each storing instructions for a respective game, and the main unit comprises switch means enabling a user to select one of the games, circuit means for rendering accessible the instructions stored by the cartridge corresponding to the selected game, and display means for indicating which of the games has been selected, characterized in that the display means comprises a display panel divided into a plurality of segments each corresponding to a respective game cartridge, and in that the segments are illuminated in sequence and the game corresponding to an illuminated segment is selected, in response to operation of the switch means.

By operating the switch means a memory cartridge is selected so that the processor can gain access thereto. At the same time, the segment in the display panel corresponding to the selected game is illuminated. Thus, the player can clearly recognize the game which he is going to play.

The preamble of claim 1 reflects the state of the art according to GB-A-2 193 868 which discloses a video games machine having a front panel which comprises a plurality of slots for receiving respective game cartridges, and an LED adjacent each slot for indicating that the game cartridge is loaded in the slot, or whether or not the loaded game cartridge is being utilized.

According to the present invention, a plurality of memory cartridges can be detachably mounted on the video games machine. The latter is provided with a panel showing the contents of the game and a switch for selecting one of these games. Thus, a plurality of games can be played with a single machine and, by the provision of the display panel, the player can clearly recognize which one of the games he is currently playing.

An embodiment of the present invention will be described, by way of illustration only with reference to the accompanying drawings, in which:
Fig. 1 is a perspective view of the embodiment of the present invention;
Fig. 2 is a cross-sectional view of the display panel of the same;
Fig. 3 is an exploded perspective view of an example of the memory cartridge;
Fig. 4 is a block diagram showing the structure of the same; and
Fig. 5 is a block diagram showing the structure of the video games machine.

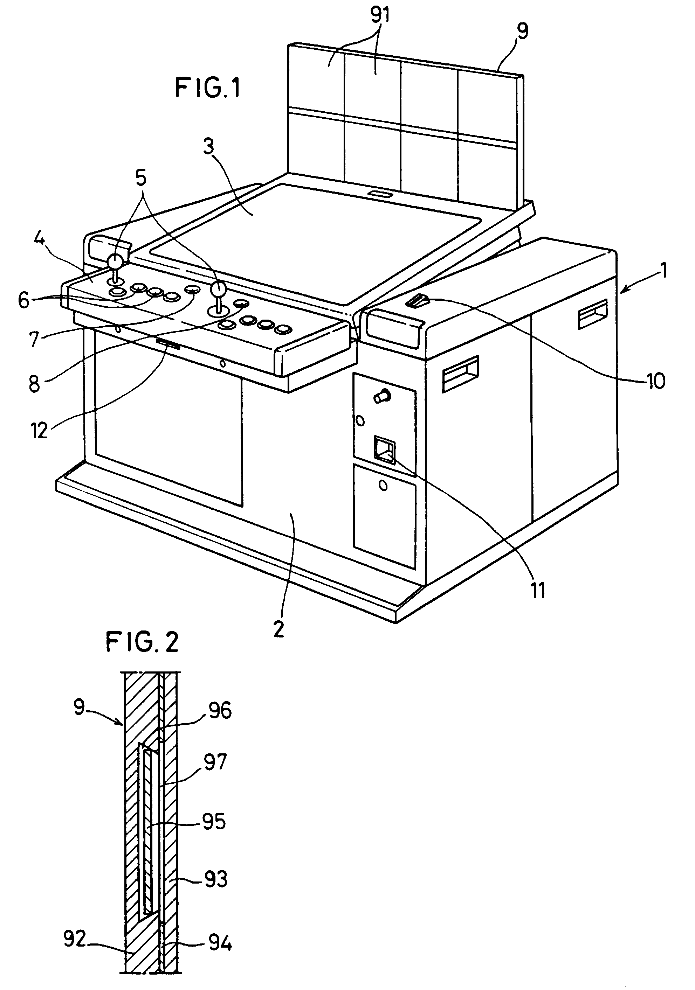

As shown in Fig. 1, a video games machine 1 comprises a cabinet 2, a CRT 3 mounted on the top of the cabinet 2, and a front control panel 4 provided with joysticks 5 and shot buttons 6, a game start button 7, and a game select switch 8. At the rear part of the cabinet 2, a display panel 9 stands upright. The cabinet 2 is also provided with a coin insert slot 10, a coin return opening 11 and an IC card insert slot 12.

The display panel 9 is divided into a plurality of (eight in the embodiment shown) segments 91 each used to illustrate the kind of a game, simple how-to-play instructions by letters and pictures, etc. By pressing the select button 8, one of the segments is illuminated to allow the player to distinguish the game selected.

As shown in Fig. 2, the panel 9 may comprise a transparent front plate 92 and a back plate 93 bonded together by adhesive. The front plate 92 is formed with grooves for inserting unit panels 95 each showing the kind of a game, how-to-play instructions, etc. Electroluminescence (EL) element plates 97 each having substantially the same shape and same area as the unit panels 95 are bonded to the back plate 93. Print wiring is formed on the back plate 93 to activate the EL element plates 97.

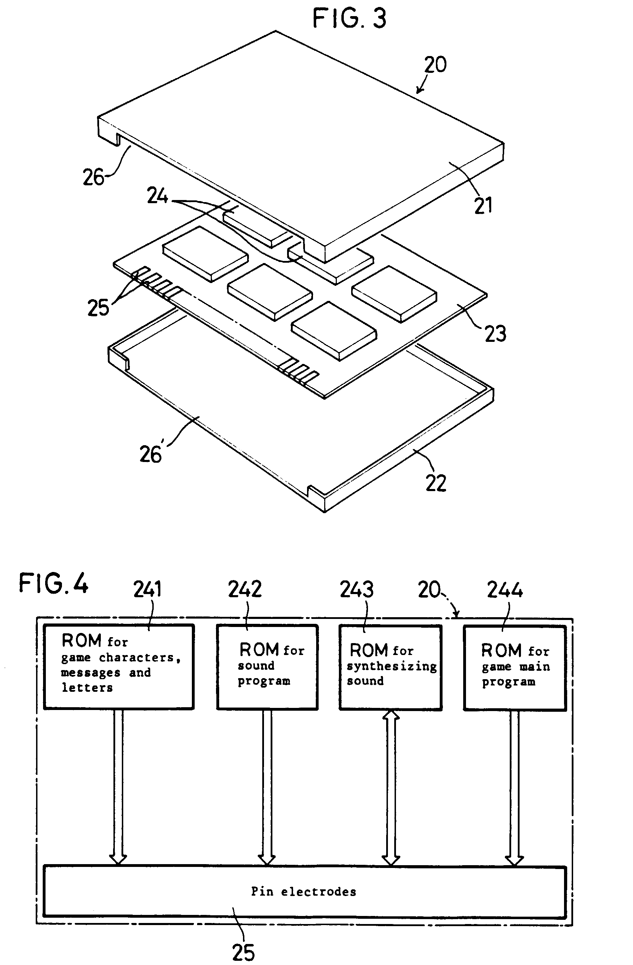

Figs. 3 and 4 show a memory cartridge 20 by way of example. It comprises top and bottom covers 21 and 22 and a printed circuit board 23. The covers 21 and 22 are bonded together to form a casing with the printed circuit board 23 housed therein.

A plurality of non-volatile memories 24 such as ROMs are mounted on the board 23 and connected to a group of pin electrodes 25 by suitable print wiring. The pin electrodes 25 are exposed to openings 26 and 26' formed in the front sides of the covers 21 and 22.

As shown in Fig. 4, the non-volatile memories 24 comprise a ROM 241 which contains picture images such as game characters, messages and letters, a ROM 242 for a sound program, a ROM 243 for synthesizing sound and a ROM 244 containing a main program for the game.

The group of pin electrodes 25 are connected to an edge connector of the video games machine 1 by setting the memory cartridge 20 in the cabinet 2 of the video games machine.

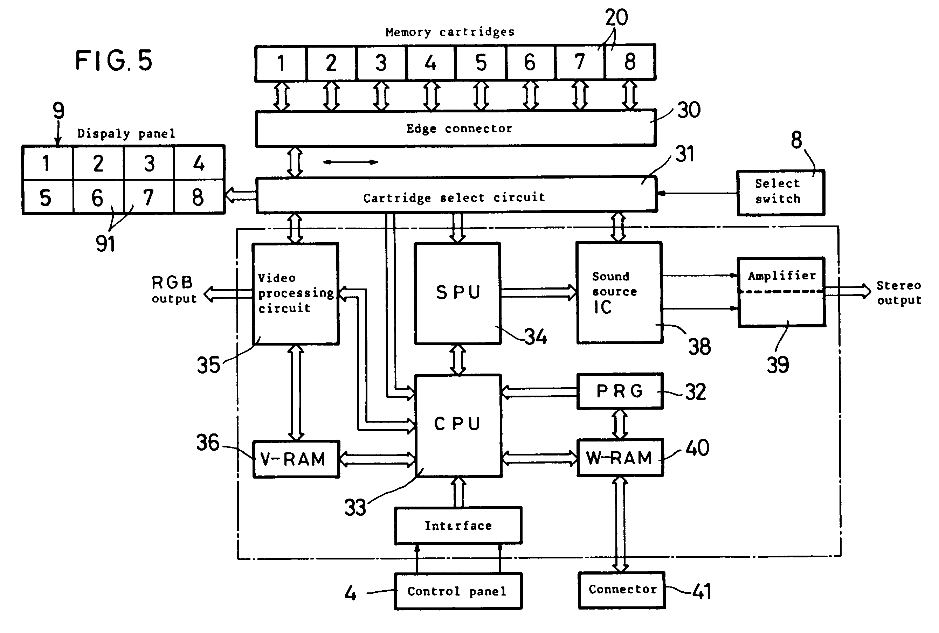

Fig. 5 shows the internal structure of the games machine 1 by way of example.

Suppose now that a plurality (eight in the embodiment shown) of memory cartridges 20 are connected to the edge connector 30 and unit panels 95 corresponding to the respective memory cartridges 20 are fitted in the segments 91.

By pressing the select switch 8, the segments 91 will be illuminated one after another. The pressure on the switch 8 is released when the segment corresponding to a desired game is illuminated. At the same time, a desired cartridge is selected from among the plurality of cartridges 20 by a cartridge select circuit 31 and is put in an accessible state.

When a start button 7 is pressed, the program PRG 32 in the main body will allow a central processing unit 33 (such as 68000 CPU) and a sound processing unit (SPU) 34 (such as Z80 CPU) to gain access to the game main program ROM 244 and the sound program ROM 242, respectively.

Upon starting the game, the game main program is executed in response to the operation of the joysticks 5 and the shot buttons 6 to control a video processing circuit 35 and the SPU 34. The video processing circuit 35 gains access to the picture ROM 241 according to the control by CPU 33. The picture ROM 241 contains e.g. 4 x 1024 characters, each character consisting of 16 x 16 dots, each dot consisting of 4 bits. Four 1-megabit ROMs are needed to store this amount of information.

Multicolor respresentation is of course impossible with four-bit per dot. This four-bit per dot information is used only to specify the color storage numbers in a palette stored in RAMs (not shown) to which video processing circuit 35 can gain access. A V-RAM 36 contains a table showing in a one-to-one relationship the number and position of each character on the monitor 3 as well as an area for sprite. The video processing circuit 35 takes out the characters in the ROMs 241 while gaining access to the corresponding portions therein to give colors to the characters by the palette, which are then given as RGB signals.

The sound processing unit 34 runs the sound program in the ROM 242 as the main program progresses, to give sound outputs to an amplifier 39 according to the content of the sound synthesizing ROM 243 which are memorized as digital information, by actuating a sound source IC38.

A work RAM (W-RAM) 40 is a memory for temporarily storing e.g. the current status and score of the game. By transferring the content of this RAM to an IC card having a backup power supply inserted in the slot 12 (Fig. 1), the game can be resumed later.

## Claims

1. A video games machine (1) comprising a main unit housing a processor (33) which can perform processing operations according to stored instructions so as to enable the playing of a video game, the stored instructions being derived from a cartridge (20) detachably coupled to the unit via a connector means (30) of the unit, wherein the connector means is arranged to allow the simultaneous coupling to said unit of a plurality of cartridges (20) each storing instructions for a respective game, and the main unit comprises switch means (8) enabling a user to select one of the games, circuit means for rendering accessible the instructions stored by the cartridge corresponding to the selected game, and display means (9) for indicating which of the games has been selected, characterized in that the display means (9) comprises a display panel (9) divided into a plurality of segments (91) each corresponding to a respective game cartridge (20), and in that the segments (91) are illuminated in sequence and the game corresponding to an illuminated segment is selected, in response to operation of the switch means (8).

2. A video games machine according to claim 1, wherein each segment of the display panel illustrates the kind of game.

3. A video games machine according to claim 2, wherein each segment of the display panel includes simple how-to-play instructions for the game.

4. A video games machine according to any of claims 1 to 3, wherein each cartridge comprises non-volatile memories (24) containing a game program, picture data and sound data.

5. A video games machine according to any of claims 1 to 4, wherein the display means utilizes electroluminescence.

## Patentansprüche

1. Videospielmaschine (1) mit einer Haupteinheit, die einen Prozessor (33) enthält, der Verarbeitungsoperationen gemäß gespeicherten Instruktionen derart ausführen kann, daß das Spielen eines Videospiels möglich ist, wobei die gespeicherten Instruktionen aus einer Kassette (20) erhalten werden, die über eine Verbindungseinrichtung (30) der Einheit abnehmbar mit der Einheit verbunden ist, wobei die Verbindungseinrichtung so angeordnet ist, daß sie das gleichzeitige Anschließen einer Anzahl von Kassetten (20), in denen jeweils die Instruktionen für ein entsprechendes Spiel gespeichert sind, an die Einheit ermöglicht, und wobei die Haupteinheit eine Schalteinrichtung (8), die es einem Benutzer ermöglicht, eines der Spiele auszuwählen, eine Schaltung, mit der auf die Instruktionen zugegriffen werden kann, die in der Kassette gespeichert sind, die dem gewählten Spiel entspricht, und eine Anzeigeeinrichtung (9) zur Anzeige umfaßt, welches der Spiele ausgewählt ist, dadurch **gekennzeichnet**, daß die Anzeigeeinrichtung (9) ein Anzeigefeld (9) aufweist, das in eine Anzahl von Segmenten (91) aufgeteilt ist, von denen jedes einer der Spielkassetten (20) entspricht, und daß die Segmente (91) nacheinander beleuchtet und in Reaktion auf eine Betätigung der Schalteinrichtung (8) das einem beleuchteten Segment entsprechende Spiel ausgewählt wird.

2. Videospielmaschine nach Anspruch 1, wobei jedes Segment des Anzeigefeldes die Art des Spieles anzeigt.

3. Videospielmaschine nach Anspruch 2, wobei jedes Segment des Anzeigefeldes einfache Spielregeln für das Spiel anzeigt.

4. Videospielmaschine nach einem der Ansprüche 1 bis 3, wobei jede Kassette nichtflüchtige Speicher (24) umfaßt, die das Spielprogramm, Bilddaten und Schalldaten enthalten.

5. Videospielmaschine nach einem der Ansprüche 1 bis 4, wobei die Anzeigeeinrichtung von Elektrolumineszenz Gebrauch macht.

## Revendications

1. Machine de jeux vidéo (1), comprenant une unité principale contenant un processeur (33) capable d'effectuer des opérations de traitement conformément à des instructions mémorisées afin de permettre de jouer à un jeu vidéo, les instructions mémorisées étant déduites à partir d'une cartouche (20) couplée de manière démontable à l'unité par l'intermédiaire de moyens de connexion (30) de l'unité, dans laquelle les moyens de connexion sont prévus pour permettre le couplage simultané à ladite unité d'une pluralité de cartouches (20) mémorisant chacune les instructions destinées à un jeu respectif, et l'unité principale comprend des moyens de commutation (8) permettant à un utilisateur de sélectionner l'un des jeux, des moyens de circuit pour rendre accessibles les instructions mémorisées par la cartouche correspondant au jeu sélectionné, et des moyens de visualisation (9) pour indiquer celui des jeux qui a été sélectionné, caractérisé en ce que les moyens de visualisation (9) comprennent un panneau de visualisation (9) divisé en une pluralité de segments (91) correspondant chacun à une cartouche de jeu respective (20), et en ce que les segments (91) sont éclairés selon une séquence et le jeu correspondant à un segment éclairé est sélectionné, en réponse à l'actionnement des moyens de commutation (8).

2. Machine de jeux vidéo selon la revendication 1, dans laquelle chaque segment du panneau de visualisation présente un type de jeu.

3. Machine de jeux vidéo selon la revendication 2, dans laquelle chaque segment du panneau de visualisation inclut des instructions simples sur la manière de jouer destinées au jeu.

4. Machine de jeux vidéo selon l'une quelconque des revendications 1 à 3, dans laquelle chaque cartouche comprend des mémoires non volatiles (24) contenant un programme de jeu, des données d'images et des données de son.

5. Machine de jeux vidéo selon l'une quelconque des revendications 1 à 4, dans laquelle les moyens de visualisation utilisent l'électroluminescence.
